(19) Europäisches Patentamt
European Patent Office
Office européen des brevets

(11) Publication number: **0 103 804**
**B1**

(12) **EUROPEAN PATENT SPECIFICATION**

(45) Date of publication of patent specification: **27.01.88**

(21) Application number: **83108743.2**

(22) Date of filing: **05.09.83**

(51) Int. Cl.$^4$: **C 08 L 63/00,** C 08 L 25/18, C 08 K 5/06, C 08 G 59/40, C 08 G 59/62, C 08 G 59/68, B 29 C 39/10

(54) **Epoxy resin composition and molded articles obtained therefrom.**

(30) Priority: **16.09.82 JP 159600/82**

(43) Date of publication of application:
**28.03.84 Bulletin 84/13**

(45) Publication of the grant of the patent:
**27.01.88 Bulletin 88/04**

(84) Designated Contracting States:
**DE FR GB**

(56) References cited:
**DE-A-2 505 250**
**DE-B-1 570 376**
**FR-A-2 061 055**
**FR-A-2 213 314**
**FR-A-2 435 492**

**PATENT ABSTRACTS OF JAPAN vol. 7, no. 139, 17th June 1983, page (C-171) (1284); & JP-A-58-53915 (HITACHI SEISAKUSHO K.K.) 30-03-1983**

**The file contains technical information submitted after the application was filed and not included in this specification**

(73) Proprietor: **HITACHI, LTD.**
**6, Kanda Surugadai 4-chome Chiyoda-ku**
**Tokyo 100 (JP)**

(73) Proprietor: **Hitachi Chemical Co., Ltd.**
**1-1, Nishi-shinjuku 2-chome Shinjuku-ku**
**Tokyo 160 (JP)**

(72) Inventor: **Ogata, Masatsugu**
**15-43, Mizukicho-2-chome**
**Hitachi-shi (JP)**
Inventor: **Ishii, Takeo**
**10-12, Suehirocho-3-chome**
**Hitachi-shi (JP)**
Inventor: **Wajima, Motoyo**
**8-8, Higashionumacho-1-chome**
**Hitachi-shi (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 103 804 B1**

Courier Press, Leamington Spa, England.

**Description**

This invention relates to an epoxy resin composition having a good storage stability, which, on being heated, is readily converted into a heat resistant and flame retardant cured product. It relates also to molded articles obtained from such a composition.

Epoxy resins are used in a wide field including casting, impregnation, lamination, molding and coating applications. The cured epoxy resins are characterized by having excellent mechanical or physical properties or thermal or chemical stability, depending upon the type of curing agents such as amines, acid anhydrides, phenolic compounds, isocyanate compounds, or polyaminobismaleimides. Epoxy resins cured with phenolic compounds are endowed with good mechanical and electrical properties as well as chemical inertness and, hence, are widely used in electrical and electronic industries.

Among phenolic compounds, the alkenylphenol polymers, when used as curing agent, impart to the cured resin a high glass transition point, good high-temperature physical properties, and desirable heat-resistant characteristics. For these reasons, alkenylphenol polymers are generally believed to be promising for use in those epoxy resins which are exposed to elevated temperatures. However, in applying epoxy resins to the plastic parts in various apparatuses and appliances, they are frequently required to have sufficient heat resistance and flame retardance, the required levels of which have recently become quite high.

To render the resin composition flame retardant, there is generally adopted a method of incorporating into the composition a flame retardant such as a halogen or phosphorus compound or antimony dioxide or a method of using an epoxy resin or curing agent containing in the molecule phosphorus or a halogen atom. These methods, however, tend to affect undesirably the physical properties of the cured product. Therefore, proper measures should be taken to minimize such a tendency. As for the epoxy resin-alkenylphenol polymer composition, there are also known a composition in which a halogenated epoxy resin is used [Japanese Patent Application Kokai (Laid-Open) No. 116,596/75; the composition of Comparative Example 1 described later] and a composition in which a halogenated vinylphenol polymer is used [Japanese Patent Application Kokai (Laid-Open) No. 103,599/75, the composition of Comparative Example 2 described later]. Another epoxy resin composition comprising an isopropenylphenol polymer and a halogenated epoxy resin which additionally may contain a curing promotor selected from tertiary amines and imidazoles has been known from FR-A-2 435 492 DE-B-1 570 376 describes flame-retardant resin compositions on the basis of polyepoxy resins which contain usual curing agents, an aromatic halogen compound selected from pentabromodiphenylether, pentabromodiphenyl, octabromodiphenyl or polystyrene whose nuclei carry halogen substituents. An essential flame-retarding component in these compositions is red phosphorus. Other flame-retardant resin compositions, comprising an epoxy resin and a brominated bisphenoxy compound have been known from FR-A-2 213 314. It was found, however, that such conventional compositions give cured resins of decreased heat resistance and there is resulted especially a distinct loss in the high temperature strength on prolonged heating, thus detracting from the excellent characteristics inherent in the epoxy resin cured with an alkenylphenol polymer.

Under the circumstances, an object of this invention is to provide an epoxy resin composition which, upon being heated, is converted into a cured product excellent in flame retardance and heat resistance, that is, high-temperature physical properties and resistance to thermal degradation, as well as to provide a molded article obtained from said composition.

This invention provides an epoxy resin composition comprising (a) an epoxy resin, (b) an alkenylphenol polymer, (c) a curing promoter, and (e) a filler, which is characterized in that the curing promoter is a urea compound represented by the formula:

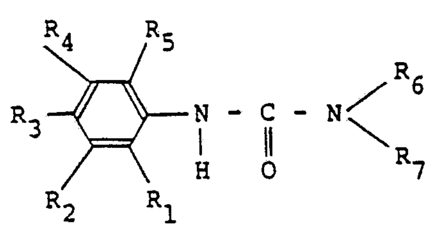

[III]

wherein $R_1$ to $R_5$, which may be the same or different, represent each a hydrogen atom or chlorine atom, and $R_6$ and $R_7$, which may be the same or different, represent each a hydrogen atom or an alkyl, alkoxy, cycloalkyl, or substituted cycloalkyl group, and that it further comprises (d) a halogen compound represented by the formula:

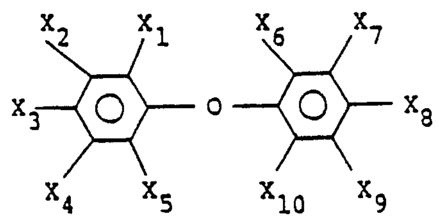

[I]

or

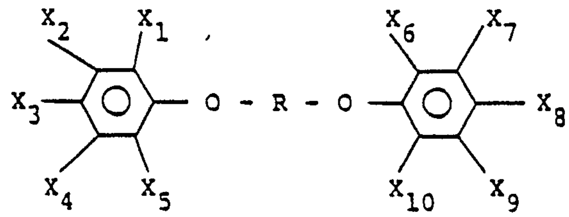

[II]

wherein $X_1$ to $X_{10}$ represent each a hydrogen, chlorine or bromine atom, at least three of $X_1$ to $X_5$ and at least three of $X_6$ to $X_{10}$ being chlorine or bromine atoms, and R represents an alkylene group or a hydroxyl-substituted alkylene group, or a mixture of said compounds of formula [I] and formula [II].

This invention further provides an epoxy resin molded article obtained from the above-mentioned composition by molding and curing under application of heat.

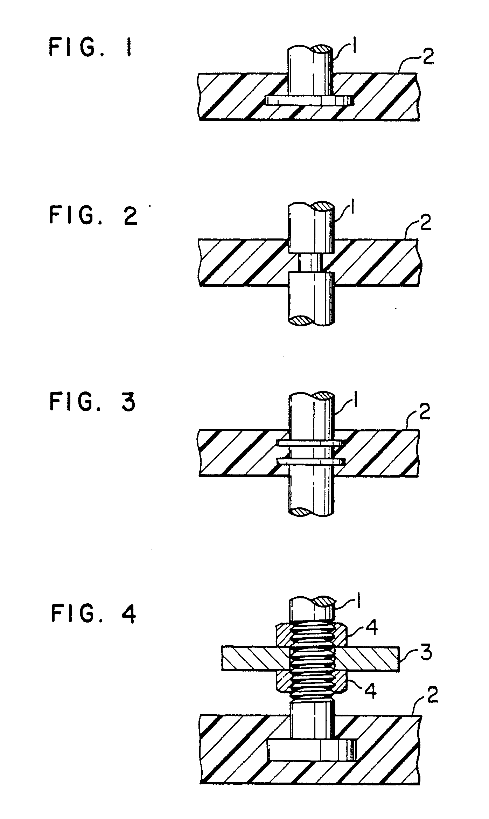

In the accompanying drawings, Figs. 1 to 4 are partial sectional views illustrating the epoxy resin molded articles including metal inserts described in Examples.

The epoxy resin (a) means a family of polymers of a compound having two or more epoxy groups in its molecule and includes all of the known epoxy resins such as bisphenol-type epoxy resins derived from bisphenol A and epichlorohydrin; novolak-type epoxy resins produced by the reaction of a novolak resin with epichlorohydrin; polyphenol-type epoxy resins obtained by the reaction between epichlorohydrin and a condensation product of a phenol with a xylene resin (obtained by the reaction of xylene with formaldehyde) or a toluene resin (obtained by the reaction of toluene with paraformaldehyde); polyhydroxy benzene-type epoxy resins produced by the reaction of epichlorohydrin with a polyhydric phenol resin such as resol or hydroquinone resin; epoxy resins formed by the reaction of an aromatic or aliphatic carboxylic acid with epichlorohydrin; epoxy resins derived from a vinyl polymer; epoxy resins derived from a polyhydric alcohol such as glycerol; epoxy resins derived from a cycloaliphatic compound such as cyclohexene, cyclopentadiene, or dicyclopentadiene; epoxy resins derived from a natural product such as starch or an unsaturated higher fatty acid; nitrogen-containing epoxy resins derived from aniline or an aliphatic amine; epoxy resins having a nitrogen-containing hetero ring derived from isocyanuric acid; silicon-containing epoxy resins obtained by the reaction of an epoxy resin with silanol; silicon-containing epoxy resins obtained by the oxidation of a silicon compound having a carbon-to-carbon double bond; epoxy phosphite resins produced by oxidation of a phosphite ester having an olefinic unsaturation with peracetic acid; and epoxy resins containing, in the form of a chelate, a heavy metal other than silicon and phosphorus. These epoxy resins may be used each alone or as a mixture thereof.

As the alkenylphenol polymer (b), there can be used those polymers obtained by thermal, ionic, or radical polymerization of alkenylphenols such as vinylphenol, n-propenylphenol, isopropenylphenol, n-butenylphenol, secondary-butenylphenol and tertiary-butenylphenol. In view of the ease of handling of the resin composition and the characteristics of the cured product, an alkenylphenol polymer having a polymerization degree of about 20 to 80 (weight average molecular weight, Mw, about 3,000 to 8,000) is preferred.

The curing promotor (c) used in the present composition is a compound promoting the reaction between the epoxy resin and the alkenylphenol polymer. Examples of the compounds usable as the promoter include salts of various amines and imidazoles, ureas, and Lewis acids. These curing promoters cause no trouble when the resin composition is used as a solution in a solvent, whereas when the resin composition is compounded with a large quantity of a filler, they are liable to present a problem of premature curing or deterioration of the storage stability of the resin composition due to heat generation during the mixing operation. For this reason, it is desirable to use a so-called latent curing promoter which does not promote the reaction at relatively low temperatures but promote the reaction when heated at a temperature of 120° to 150°C or above. As useful latent curing promoters, mention may be made of quaternary ammonium, phosphonium, and arsonium compounds, and tetra-substituted borates of imidazoles, pyridines, piperidines, and morpholines. Especially preferred ones are urea compounds of the formula:

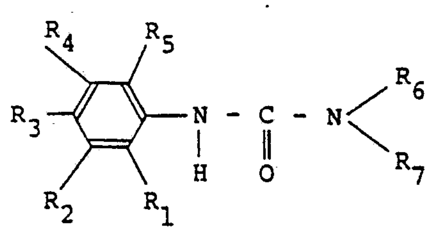

[III]

wherein $R_1$ to $R_5$, which may be the same or different, independently represent a hydrogen or chlorine atom, and $R_6$ and $R_7$, which may be the same or different, independently represent a hydrogen atom, an alkyl group, an alkoxy group, a cycloalkyl group, or a substituted cycloalkyl group. As examples, there may be listed 3-(p-chlorophenyl)-1, 1-dimethylurea, 3-(3, 4-dichlorophenyl)-1, 1-dimethylurea, 3-(3, 4-dichlorophenyl)-1-methoxy-1-methylurea, 3-(3, 4-dichlorophenyl)-1, 1-diethylurea, and 1-(2-methylcyclohexyl)-3-phenylurea.

The outstanding feature of the present invention is the incorporation of the halogen compound (d) represented by the general formula [I] or [II]. These halogen compounds contribute much to the improvement in heat resistance without causing any loss in flame retardance. As examples of particular compounds, there may be listed 2,2′,3,3′,4,4′,5,5′-octabromodiphenyl ether, 2,2′,3,3′,4,4′,5,5′-octachlorodiphenyl ether, decabromodiphenyl ether, decachlorodiphenyl ether, 1,2-bis(pentabromophenoxy)ethane, and 1,3-bis(2,4,6-tribromophenoxy)-2-hydroxyproprane.

Although no special limitation is posed on the compounding ratio of epoxy resin (a) to alkenylphenol polymer (b), it is generally desirable that the molar ratio of epoxy group to phenolic hydroxyl group be in the range of from 0.8 to 1.2. The proportion of curing promoter may be varied in a broad range depending on the intended use of the resin composition, but in order to effect rapid curing upon heating, it is desirable to use 0.1 to 5, preferably 1 to 3, parts by weight of the promoter per 100 parts by weight of the epoxy resin. The flame retardant of the aforementioned general formula [I] and/or [II] is used so that the chlorine or bromine content of the composition may become 3 to 15% by weight, preferably 5 to 10% by weight, based on the total weight of the components (a), (b), (c) and (d). Preferable flame retardants are those which contain in the molecule a large number of chlorine or bromine atoms, most preferable ones being those containing 3 or more halogen atoms per one aromatic nucleus.

So far as the object of this invention is not interfered with, the present epoxy resin composition may be incorporated with modifiers such as phenol resins, melamine resins, silicone resins, bismaleimide compounds, polyaminobismaleimide compounds, silicone rubbers, polybutadiene rubbers, polyethylene, nylon, and polytetrafluoroethylene; inorganic or organic fillers, fibrous reinforcing materials, diluents, solvents, dyes, release agents, and coupling agents.

Examples of the aforementioned fillers (e) are glass fiber, carbon fiber, potassium titanate fiber, wollastonite fiber, alumina fiber, zirconia fiber, ceramic fibers; metal fibers such as copper, aluminium and stainless steel fibers; organic fibers such as cellulose, nylon, and Kevlar fibers; calcium carbonate, magnesium carbonate, zirconia, mica, clay, kaolin, aluminium hydroxide, magnesium hydroxide, alumina, silica, fused silica glass, glass beads, titanium white, gypsum, barium sulfate, graphite, carbon black, graphite fluoride, molybdenum disulfide, boron nitride, beryllium oxide, and various metal powders. These fillers can be used each alone or as a mixture thereof. The fillers are incorporated for the purpose of imparting to the molded articles (cured resin products) various characteristics not obtainable by the resin components alone, such as reduction in mold shrinkage or in thermal expansion coefficient, improvement in heat conductivity, abrasion resistance, mechanical strength, and creep resistance; and development of intended characteristics such as electrical conductivity and antistatic properties. The fillers are used in an amount of generally 5 to 500 parts by weight, preferably 200 to 400 parts by weight, per 100 parts by weight of the resin components (a) and (b).

In dispersing uniformly a large quantity of fillers, since an epoxy resin-alkenylphenol polymer composition has a high viscosity, the composition may be dissolved in an organic solvent, then the fillers are impregnated with the resulting solution, and the solvent is allowed to volatilize. Such a method, however, is not always desirable in view of practicability, safety, hygienics, and economics of the method and the characteristics of the molded articles obtained from such a material. According to the results of experiments carried out by the present inventors, a satisfactory composition can be obtained by mixing a finely powdered alkenylphenol polymer and a filler with the epoxy resin to form a dispersion. The dispersive mixing can be effected by means of a Henscher mixer, kneader, or extruder. In the case of a composition containing a common promoter, there is a danger to provoke the curing reaction during mixing owing to the frictional heat generated by the milling operation, whereas in the present composition such a trouble is avoided by the use of a latent curing promoter.

The invention is illustrated below with reference to Examples, wherein all parts are by weight. In Examples and Comparative Examples, main materials which were employed and their abbreviations are as follows:

| | |
|---|---|
| DEN 438✂0: | A novolak-type epoxy resin; epoxy equivalent 180. |
| DEN 542✂0: | A brominated novolak-type epoxy resin; epoxy equivalent 350; bromine content, 46% |
| Resin M: | Poly-p-vinylphenol; hydroxyl equivalent 120; weight-average molecular weight, 5,700. |
| Resin MB: | Brominated poly-p-vinylphenol; hydroxyl equivalent, 235; weight-average molecular weight, 10,000; bromine content, 50%. |
| CPDU: | 3-(p-Chlorophenyl)-1,1-dimethylurea, a latent promoter. |
| DBDU: | Decabromodiphenyl ether, a flame retardant. |
| HBPE: | 1,2-bis(Pentabromophenoxy)ethane, a flame retardant. |
| TBPP: | 1,3-bis(2,4,6-Tribromophenoxy)-2-hydroxypropane, a flame retardant. |

Example 1

Four resin compositions were prepared, as shown in Table 1, by mixing 100 parts of an epoxy resin DEN-438✂0, 68 parts of an alkenylphenol polymer Resin M (74 um or below in particle size), 3 parts of 3-(p-chlorophenyl)-1,1-dimethylurea, and varied amounts of a flame retardant decabromodiphenyl ether. To each resin composition, were added 400 parts of a fused silica powder of 4 um in average particle size as a filler, 150 parts of glass fiber of 3 mm in length as a reinforcement, 2 parts of epoxysilane as a coupling agent, and 3 parts of a montanate ester wax as a release agent. The resulting composition was kneaded for 15 minutes in a kneader heated at about 70°C to prepare a molding material. A test specimen, 127 x 12.7 x 1.0 (thickness) mm, was transfer-molded from each molding material under the following conditions: mold temperature, 180°C; molding pressure, 14,715MPa (150 $kg/cm^2$); curing time, 1 minute. Each molded specimen was tested for the flammability according to UL 94. As seen from the test results shown in Table 1, it was possible to attain flame-retardancy grade of V-O in UL 94 by adjusting the bromine content of the resin composition to 6.5% by weight or above.

TABLE 1

| | Specimen No. | 1 | 2 | 3 | 4 |
|---|---|---|---|---|---|
| Epoxy resin | DEN—438® | 100 | 100 | 100 | 100 |
| Alkenylphenol polymer | Resin M | 68 | 68 | 68 | 68 |
| Curing promoter | 3-(p-Chlorophenyl)-1,1-dimethylurea | 3 | 3 | 3 | 3 |
| Flame retardant | Decabromodiphenyl ether | 0 | 5 | 10 | 15 |
| Filler | Fused silica powder | 400 | 400 | 400 | 400 |
| Reinforcement | Glass fiber, chopped, 3 mm in length | 150 | 150 | 150 | 150 |
| Coupling agent | Epoxysilane | 2 | 2 | 2 | 2 |
| Release agent | Montanate ester wax | 3 | 3 | 3 | 3 |
| Bromine content of total resin component (wt %) | | 0 | 2.2 | 4.4 | 6.5 |
| Flame-retardancy of molded article (UL class) | | V—2 | V—2 | V—1 | V—0 |

Example 2

A molding material was prepared, as in Example 1, by kneading together in a kneader 100 parts of DEN-438✂0, 68 parts of Resin M, 3 parts of 3-(p-chlorophenyl)-1,1-dimethylurea, 15 parts of decabromodiphenyl ether (bromine content of the above resin components in total: 6.5% by weight), 2 parts of epoxysilane, and 3 parts of montanate ester wax.

Example 3

A molding material was prepared, as in Example 1, by kneading together in a kneader 100 parts of DEN-438✂0, 68 parts of Resin M, 3 parts of 3-(p-chlorophenyl)-1,1-dimethylurea, 15 parts of a flame retardant 1,2-bis(pentabromophenoxy) ethane (bromine content of the above resin components in total: 6.5% by weight), and the same proportions as those in Example 1 of fused silica powder, chopped glass strands, epoxysilane, and montanate ester wax.

Example 4

A molding material was obtained by kneading together in a kneader, as in Example 1, 100 parts of DEN-438✂0, 68 parts of Resin M, 3 parts of 3-(p-chlorophenyl)-1,1-dimethylurea, 18 parts of a flame retardant 1,3-bis(2,4,6-tribromophenoxy)-2-hydroxypropane (bromine content of the above resin components in total: 6.5% by weight), and the same proportions as those in Example 1 of fused silica glass powder, chopped glass strands, epoxysilane, and montanate ester wax.

Comparative Example 1

A molding material was prepared as in Example 1 by kneading together in a kneader 77 parts of DEN-438✂0, 23 parts of a brominated bisphenol-base epoxy resin DER-542✂0, 58 parts of Resin M, 3 parts of 3-(p-chlorophenyl)-1,1-dimethylurea (bromine content of the above total resin components: 6.7% by weight), 375 parts of fused silica powder, 140 parts of chopped glass strands, 2 parts of epoxysilane, and 3 parts of montanate ester wax.

Comparative Example 2

A molding material was prepared as in Example 1 by kneading together in a kneader 100 parts of DEN-438✂0, 23 parts of Resin MB, 55 parts of Resin M, 3 parts of 3-(p-chlorophenyl)-1,1-dimethylurea (bromine content of the above total resin components: 6.5% by weight), 430 parts of fused silica powder, 150 parts of chopped glass strands, 2 parts of epoxysilane, and 3 parts of montanate ester wax.

Next, various test specimens were molded from each of the above molding materials and tested for the characteristics of each material. The molding was performed by means of a transfer molding machine under the following conditions: mold temperature 150°C; molding pressure, 14,715 MPa (150 $kg/cm^2$); curing time, 1 minute. The results of tests were as shown in Table 2. As is apparent from Table 2, the materials of this invention showed good storage stability, and in spite of a short-time molding, 1 minute at 180°C, the molded articles, in addition to being flame retardant, were excellent in high-temperature physical properties and in the resistance to thermal degradation upon being heated for a long period of time.

TABLE 2

| | | Example 2 | Example 3 | Example 4 | Comparative Example 1 | Comparative Example 2 |
|---|---|---|---|---|---|---|
| Storage stability* (day, 25°C) | | >30 | >30 | >30 | >30 | >30 |
| Flame retardancy (class, UL 94) | | V—0 | V—0 | V—0 | V—0 | V—0 |
| Bending strength ($kg/cm^2$) (1 $kp/cm^2$ = 0,0981 MPa) | | | | | | |
| Initial | Room temp. | 1430 | 1445 | 1380 | 1450 | 1500 |
| | 200°C | 635 | 650 | 655 | 630 | 637 |
| After heating at 250°C for 30 days | Room temp. | 1380 | 1330 | 1250 | Not determinable | |
| | 200°C | 600 | 585 | 575 | | |
| After heating at 230°C for 30 days | Room temp. | 1400 | 1370 | 1365 | | |
| | 200°C | 615 | 595 | 585 | | |
| After heating at 200°C for 30 days | Room temp. | 1475 | 1410 | 1400 | 655 | 710 |
| | 200°C | 675 | 680 | 673 | 305 | 285 |
| Heating loss** (%) 250°C, 30 days | | 6.5 | 10.5 | 11.0 | 30.2 | 25.8 |
| 230°C, 30 days | | 3.0 | 4.8 | 4.5 | 26.5 | 20.2 |
| 200°C, 30 days | | 1.2 | 2.5 | 2.6 | 5.5 | 6.5 |

Note: * Time (day) elapsed before the fluidity of the molding material has decreased to one-half of the initial value.
** Value calculated on the basis of resin components contained in the molded article, assuming that the heating loss originates from the resin components.

The epoxy resin composition of the present invention can be processed by the injection molding or transfer molding and produces molded articles excellent in properties, particularly in heat resistance and flame retardancy.

As known well, molded articles of thermoplastic or thermosetting resins having a metal insert disposed through the molded article or embedded therein are widely used in insulating parts or structural parts of electrical apparatuses and appliances, electronic devices, office appliances, transportation equipments, and the like. The use conditions for these parts become severe year by year. This situation reveals itself distinctly in the requirements for the thermal degradation characteristics of the resin material. Quite recently, for the purpose of making an equipment more compact in size and lighter in weight, the change of conventional metallic material to plastic one is in progress. This change requires also a plastic material excellent in high-temperature mechanical properties and in resistance to thermal degradation. Thus, the problem of heat-resisting characteristics now attracts attention from various fields and the improvement in resin materials is continually in progress. On the other hand, the requirements for the workability and the characteristics are divergent depending upon the use of the material, and the levels of requirements tend to become higher. Accordingly, it is difficult for a particular material to meet all the requirements. Especially in the case wherein a metal insert is formed by using a material mixed with a large amount of granular, flaky, or fibrous fillers, as generally employed in thermosetting resin molding materials, for purposes of decreasing mold shrinkage and thermal expansion coefficient, or improving various properties such as thermal conductivity, abrasion resistance, mechanical strength, and resistance to thermal shock, and the resulting molded article using such a metal insert is allowed to stand at high temperatures or said metal insert is exposed to a high temperature by attaching a heat-generating element to said metal insert, there occurs thermal degradation both at the surface of the mold article and at the interface between the molded article and the metal insert and particularly the thermal degradation easily proceeds near the interface of the metal insert and the molded article. As a consequence, for example, the thermal life evaluated by the pull-out strength of the metal insert becomes far shorter than the thermal life tested on the molding material alone. Thus, it was difficult for a conventional molding material to produce molded articles of excellent long-term resistance to thermal degradation. Thermosetting molding materials employing as one of the resin components a maleimide compound or a polyaminobismaleimide compound are well known to be heat resistant. When equipment parts including a metal insert are molded from these materials and the metal insert is heated at a temperature of 200°C or above, the thermal life evaluated by the pull-out strength of the insert is markedly shorter than the thermal life of the molding material itself.

The present inventors carried out a thorough study on the mechanism of thermal degradation of a composite material. As a result, it was found that the long-term resistance to thermal degradation of a heat resistant molded article including a metal insert is greatly affected by the adhesiveness of the resin components to the filler and metal insert as well as the tenacity of the molded article in addition to the heat resistance of the resin components. It was also found that the epoxy resin composition of this invention is very useful for the molded article including a metal insert.

Figs. 1 to 3 show molded articles with metal inserts, to which the present invention is adaptable. Fig. 4 is a sectional view of an example of metal insert provided with a heater. Numeral *1* is a metal insert, *2* a resin phase (after curing), *3* a heater, and *4* a nut to fix the heater. The shape of insert and the method of molding are not limited to those represented by the above drawings. The insert may be provided with a heat-generating element other than a heater, various electrical parts and mechanical parts.

### Examples 5 to 12

Molding materials of the compositions shown in Table 3 were prepared by using epoxy resins of DER—332® (a semisolid epoxy resin of bisphenol A base; epoxy equivalent, 175) and DEN—438® (a novolak-type epoxy resin; epoxy equivalent, 180; softening point, 38°C), alkenylphenol polymers of Resin M (poly-p-vinylphenol; hydroxyl equivalent, 120; weight-average molecular weight, 5,700; 74 μm (200 mesh) or less in particle size, poly-p-isopropenylphenol (hydroxyl equivalent, 135; average molecular weight, 5,500), and latent curing promoters of 3-(p-chlorophenyl)-1,1-dimethylurea (LCA—I), triethylammonium tetraphenylborate (LCA—II), 2-ethyl-4-methylimidazolium tetraphenylborate (LCA—III), tetraphenylphosphonium tetraphenylborate (LCA—IV), and methylmorpholinium tetraphenylborate (LCA—V).

Mixing of the components was conducted in a kneader by kneading together the alkenylphenol polymer, filler, and release agent for about 5 minutes, then adding the epoxy resin, and again kneading for about 15 minutes. During kneading, the kneader was heated at 40° to 60°C.

Using the above molding materials, molded articles with molded-in brass inserts *1* shown in Fig. 1 were prepared by transfer molding under the following conditions: mold temperature, 180°C; molding pressure, 14,715 MPa (150 kg/cm$^2$); molding time, 3 minutes. Numeral *2* is the resin phase. After molding, the molded articles were post-cured at 200°C for 5 hours. Each molded article was tested for the initial pull-out strength of the insert. The insert of each molded article was then heated at 270°C, the ambient temperature being room temperature, and the change of pull-out strength at 25°C with the lapse of time was measured. The results obtained were as shown in Table 3.

### Examples 13 to 15

Molding materials shown in Table 4 were prepared, as in Example 5, by using a mixture of DER—332, Resin M, and N,N'-4,4'-diphenylmethanebismaleimide (BMI) as resin component and dicumyl peroxide (DCPO) as additional curing catalyst. Molded articles with molded-in brass inserts were prepared from the above molding materials and tested for the insert pull-out strength before and after thermal degradation. The results obtained were as shown in Table 4.

### Comparative Example 3

A mixture was prepared by thoroughly mixing 4 moles of N,N'-4,4'-diphenylmethanebismaleimide and 1 mole of 4,4'-diaminodiphenylmethane. The mixture was heated at 150°C for 30 minutes. After cooling, the mixture was ground to obtain a polyaminobismaleimide prepolymer (briefly PABMI). Using this prepolymer a molding material of the composition shown in Table 5 was prepared by milling on hot mixing rolls.

### Comparative Example 4

Using PABMI, DEN—438®, and a novolak-type phenol resin (average polymerization degree, 4; softening temperature, 80°C), a molding material of the composition shown in Table 5 was prepared by milling on hot rolls.

### Comparative Example 5

A molding material of the composition shown in Table 5 was prepared by milling together on hot rolls BMI, an unsaturated polyester of terephthalic acid base (a condensate from 0.45 mole of terephthalic acid, 0.55 mole of maleic acid, 0.45 mole of terephthalic acid, 0.55 mole of maleic acid, 0.45 mole of ethylene glycol, and 0.55 mole of propylene glycol; softening point, 90°C), and N-vinylpyrrolidone.

Molded articles with molded-in metal insert similar to those in Example 5 (see Fig. 1) were prepared from the molding materials obtained in Comparative Examples 3 to 5, and tested for the initial insert pull-out strength and the change with the lapse of time of the insert pull-out strength upon heating the insert-containing area at 270°C. The results obtained were as shown in Table 5.

TABLE 3

| Example No. | | 5 | 6 | 7 | 8 | 9 | 10 | 11 | 12 |
|---|---|---|---|---|---|---|---|---|---|
| DER—332® | | 100 | 100 | — | — | — | — | — | — |
| DEN—438® | | — | — | 100 | 100 | 100 | 100 | 100 | 100 |
| Resin M | | 68 | — | 68 | — | 68 | 68 | 68 | 68 |
| Poly-p-iso-propenylphenol | | — | 70 | — | 70 | — | — | — | — |
| LCA—I | | 3 | 3 | 3 | 3 | — | — | — | — |
| LCA—II | | — | — | — | — | 3 | — | — | — |
| LCA—III | | — | — | — | — | — | 3 | — | — |
| LCA—IV | | — | — | — | — | — | — | 3 | — |
| LCA—V | | — | — | — | — | — | — | — | 3 |
| Fused silica glass powder (average particle size 5 µm) | | 400 | 400 | 400 | 400 | 400 | 400 | 400 | 400 |
| Chopped glass strands (1.5 mm in length) | | 100 | 100 | 100 | 100 | 100 | 100 | 100 | 100 |
| Hoechst Wax E | | 2 | 2 | 2 | 2 | 2 | 2 | 2 | 2 |
| Insert pull-out strength (kg) (1 Kp = 9,81 N) | | | | | | | | | |
| Initial | 25°C | 230 | 215 | 220 | 200 | 220 | 230 | 235 | 222 |
| | 150°C | 158 | 155 | 168 | 153 | 170 | 168 | 161 | 172 |
| | 200°C | 108 | 110 | 135 | 127 | 133 | 140 | 135 | 140 |
| After 5 days* | | 240 | 235 | 250 | 238 | 246 | 239 | 240 | 233 |
| After 12 days* | | 225 | 207 | 209 | 188 | 215 | 221 | 223 | 215 |
| After 30 days* | | 170 | 166 | 195 | 175 | 188 | 206 | 212 | 198 |

Note: *Thermal degradation at 270°C

TABLE 4

| Example No. | | 13 | 14 | 15 |
|---|---|---|---|---|
| DER—332® | | 100 | 100 | 100 |
| Resin M | | 68 | 68 | 68 |
| BMI | | 30 | 60 | 90 |
| LCA—I | | 3 | 3 | 3 |
| DCPO | | 1 | 1 | 1 |
| Fused silica glass powder (average particle size 5 μm) | | 400 | 400 | 400 |
| Chopped glass strand (1.5 mm in length) | | 100 | 100 | 100 |
| Zinc stearate | | 2 | 2 | 2 |
| Insert pull-out strength (kg) (1 Kp = 9,81 N) | | | | |
| Initial | 25°C | 228 | 225 | 218 |
| | 150°C | 172 | 205 | 204 |
| | 200°C | 150 | 187 | 183 |
| After 5 days* | | 226 | 215 | 213 |
| After 12 days* | | 220 | 207 | 190 |
| After 30 days* | | 208 | 190 | 140 |

Note: *Thermal degradation at 270°C

TABLE 5

| Comparative Example No. | | 3 | 4 | 5 |
|---|---|---|---|---|
| PABMI | | 100 | 100 | — |
| BMI | | — | — | 100 |
| DEN—431® | | — | 100 | — |
| Novolak-type phenol resin | | — | 50 | — |
| Unsaturated polymer, terephthalic acid base | | — | — | 30 |
| N-vinylpyrrolidone | | — | — | 20 |
| LCA—I | | — | 2 | — |
| DCPO | | 1 | 1 | 1 |
| Fused silica glass powder (average particle size 5 μm) | | 225 | 450 | 250 |
| Chopped glass strands (1.5 mm in length) | | 75 | 150 | 90 |
| Hoechst Wax E | | 2 | 3 | 2 |
| Insert pull-out strength (kg) (1 Kp = 9,81 N) | | | | |
| Initial | 25°C | 195 | 235 | 215 |
| | 150°C | 180 | 210 | 200 |
| | 200°C | 160 | 175 | 190 |
| After 5 days* | | 171 | 210 | 205 |
| After 12 days* | | 145 | 98 | 55 |
| After 30 days* | | 50 | 10 | Not determinable |

Note: *Thermal degradation at 270°C

As is apparent from the above results, the molded articles of the present invention have high metal insert pull-out strength at high temperatures and the deterioration of said strength upon thermal degradation is low. Therefore, these molded articles are suitable for wide use as heat-resistant plastic parts. An especially interesting fact is that the molded articles according to this invention are more resistant to thermal degradation than those of maleimide resin which is known as a resin more heat resistant than epoxy resin.

**Claims**

1. An epoxy resin composition comprising (a) an epoxy resin, (b) an alkenylphenol polymer, (c) a curing promoter and (e) a filler, characterized in that the curing promoter is a urea compound represented by the formula:

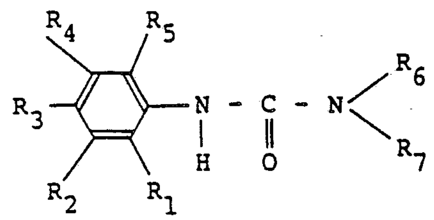

[III]

wherein $R_1$ to $R_5$, which may be the same or different, represent each a hydrogen atom or chlorine atom, and $R_6$ and $R_7$, which may be the same or different, represent each a hydrogen atom or an alkyl, alkoxy, cycloalkyl, or substituted cycloalkyl group, and that it further comprises (d) a halogen compound represented by the formula:

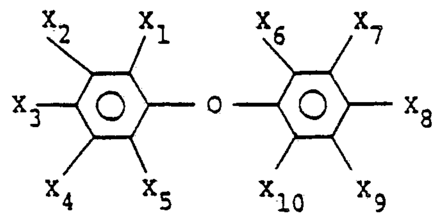

[I]

or

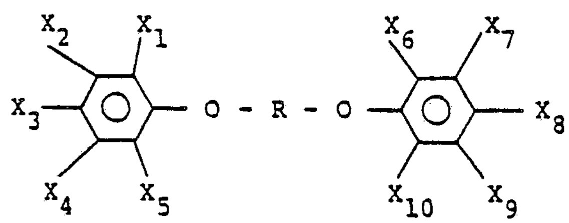

[II]

wherein $X_1$ to $X_{10}$ represent each a hydrogen, chlorine or bromine atom, at least three of $X_1$ to $X_5$ and at least three of $X_6$ to $X_{10}$ being chlorine or bromine atoms, and R represents an alkylene group or a hydroxyl-substituted alkylene group, or a mixture of said compounds of formula (I) and formula (II).

2. An epoxy resin composition according to Claim 1 wherein the epoxy resin (a) and the alkenylphenol polymer (b) are contained in a weight ratio of the epoxy group to the phenolic hydroxyl group of 0.8 to 1.2, the curing promoter (c) is contained in an amount of 0.1 to 5 parts by weight based on 100 parts by weight of the epoxy resin (a), the halogen compound (d) is contained so as to make the chlorine or bromine content 3 to 15% by weight based on the total weight of the components (a), (b), (c) and (d), and the filler is contained in an amount of 5 to 500 parts by weight based on 100 parts by weight of the resin components (a) and (b).

3. An epoxy resin composition according to either of claims 1 or 2, wherein the alkenylphenol polymer has a degree of polymerization of about 20 to 80.

4. An epoxy resin composition according to any of claims 1 to 3, wherein the halogen compound (d) is at least one compound selected from the group consisting of 2,2',3,3',4,4',5,5'-octabromodiphenyl ether, 2,2',3,3',4,4',5,5'-octachlorodiphenyl ether, decabromodiphenyl ether, decachlorodiphenyl ether, 1,2-bis-(pentabromophenoxy)ethane, and 1,3-bis(2,4,6-tribromophenoxy)-2-hydroxypropane.

5. An epoxy resin composition according to any of claims 1 to 4, wherein the urea compound is 3-(p-chlorophenyl)-1,1-dimethylurea, 3-(3,4-dichlorophenyl)-1,1-dimethylurea, 3-(3,4-dichlorophenyl)-1-methoxy-1-methylurea, 3-(3,4-dichlorophenyl)-1,1-diethylurea, or 1-(2-methylcyclohexyl)-3-phenylurea.

6. An epoxy resin molded article prepared by molding and curing an epoxy resin composition according to any of claims 1 to 5.

7. An epoxy resin molded article according to claim 6, wherein the molded article includes a metal insert.

**Revendications**

1. Composition de résine époxy comprenant (a) une résine époxy, (b) un polymère d'alkénylphénol, (c) un agent favorisant le durcissement et (e) un agent de remplissage, caractérisée en ce que l'agent favorisant le durcissement est un composé d'urée représenté par la formule:

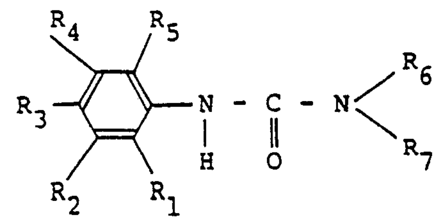
[III]

dans laquelle $R_1$ à $R_5$, qui peuvent être identiques ou différents, représentent chacun un atome d'hydrogène ou un atome de chlore, et $R_6$ et $R_7$, qui peuvent être identiques ou différents, représentent chacun un atome d'hydrogène ou un groupe alkyle, alkoxy, cycloalkyle ou un groupe cycloalkyle substitué, et qu'il comporte en outre (d) un composé d'un halogène représenté par la formule

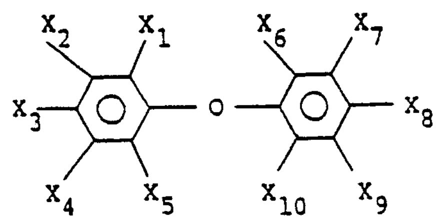
[I]

or

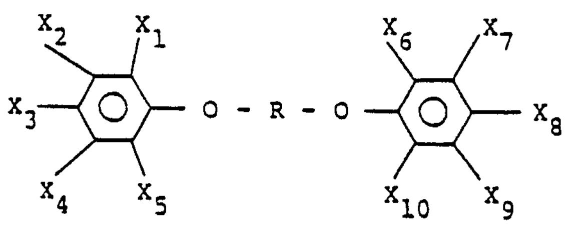
[II]

dans laquelle $X_1$ à $X_{10}$ représentent chacun un atome d'hydrogène, de chlore ou de brome, au moins trois des symboles $X_1$ à $X_5$ et au moins trois des symboles $X_6$ à $X_{10}$ représentant des atomes de chlore ou de brome, et R représente un groupe alkylène ou un groupe alkylène substitué avec un hydroxyle, ou un mélange desdits composés de la formule [I] et de la formule [II].

2. Composition de résine époxy selon la revendication 1, dans laquelle la résine époxy (a) et le polymère d'alkénylphénol (b) sont contenus dans un rapport pondéral du groupe époxy au groupe hydroxyle phénolique compris entre 0,8 et 1,2, l'agent (c) favorisant le durcissement est présent en une quantité comprise entre 0,1 et 5 parts en poids sur la base de 100 parts en poids de la résine époxy (a), le composé (d) d'un halogène est présent de manière à fournir une teneur en chlore ou en brome comprise entre 3 et 15% en poids sur la base du poids total des composants (a) et (b), (c) et (d), et l'agent de remplissage est présent en une quantité comprise entre 5 et 500 parts en poids sur la base de 100 parts en poids des composants (a) et (b) de la résine.

3. Composition de résine époxy selon l'une ou l'autre des revendications 1 ou 2, dans laquelle le polymère d'alkénylphénol possède un degré de polymérisation compris entre environ 20 et 80.

4. Composition de résine époxy selon l'une quelconque des revendications 1 à 3, dans laquelle le composé (d) d'un halogène est au moins un composé choisi dans le groupe comprenant le 2,2',3,3',4,4',5,5'-octabromodiphényléther, le 2,2',3,3',4,4',5,5'-octachlorodiphényléther, le décabromodiphényléther, le décachlorodiphényléther, le 1,2-bis-(pentabromophenoxy)éthane et le 1,3-bis(2,4,6-tribromophénoxy)-2-hydroxypropane.

5. Composition de résine époxy selon l'une quelconque des revendications 1 à 4, dans laquelle le composé d'urée est la 3-(p-chlorophényl)-1,1-diméthylurée, la 3-(3,4-dichlorophényl)-1,1-diméthylurée, la 3-(3,4-dichlorophényl)-1-méthoxy-1-méthylurée, la 3-(3,4-dichlorophényl)-1,1-diéthylurée, ou la 1-(2-méthylcyclohexyl)-3-phénylurée.

6. Article moulé en résine époxy, préparé par moulage et durcissement d'une composition de résine époxy selon l'une quelconque des revendications 1 à 5.

7. Article moulé en résine époxy, selon la revendication 6, l'article moulé comprenant un insert métallique.

**Patentansprüche**

1. Epoxidharzzusammensetzung, die (a) ein Epoxidharz, (b) ein Alkenylphenolpolymer, (c) einen Härtebeschleuniger und (e) ein Füllmittel enthält, dadurch gekennzeichnet, daß der Härtebeschleuniger eine Harnstoffverbindung ist, dargestellt durch folgende Formel:

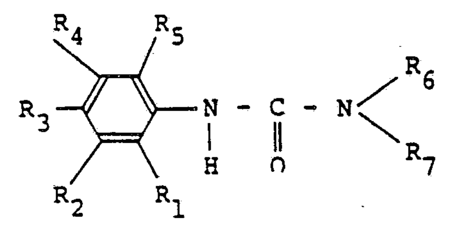

[III]

worin $R_1$ bis $R_5$, die gleich oder verschieden sein können, je ein Wasserstoffatom oder Chloratom darstellen, und $R_6$ und $R_7$, die gleich oder verschieden sein können, je ein Wasserstoffatom oder eine Alkyl-, Alkoxy-, Cycloalkyl- oder substituierte Cycloalkylgruppe darstellen, und daß sie weiterhin (d) eine Halogenverbindung enthält, dargestellt durch folgende Formel:

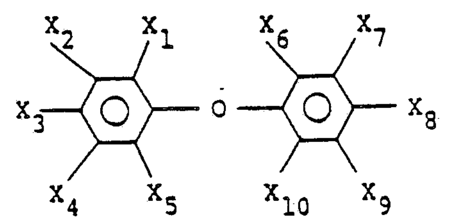

[I]

or

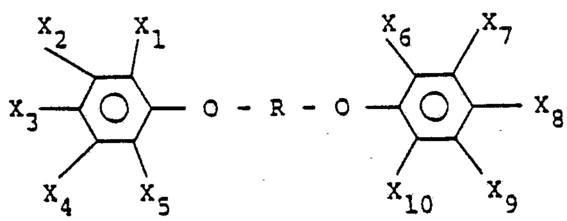

[II]

worin $X_1$ bis $X_{10}$ je ein Wasserstoff-, Chlor- oder Bromatom darstellen, wobei mindestens drei aus $X_1$ bis $X_5$ und mindestens drei aus $X_6$ bis $X_{10}$ Chlor- oder Bromatome sind, und R eine Alkylengruppe oder eine Hydroxyl-substituierte Alkylengruppe darstellt, oder eine Mischung der Verbindungen mit Formel (I) und Formel (II).

2. Epoxidharzzusammensetzung nach Anspruch 1, wobei das Epoxidharz (a) und das Alkenylphenolpolymer (b) in einem Gewichtsverhältnis der Epoxidgruppe zu der phenolischen Hydroxylgruppe von 0,8 bis 1,2 enthalten sind, der Härtebeschleuniger (c), bezogen auf 100 Gew.-Teile des Epoxidharzes (a), in einer Menge von 0,1 bis 5 Gew.-Teilen enthalten ist, die Halogenverbindung (d) so enthalten ist, daß der Chlor- oder Bromgehalt, bezogen auf das Gesamtgewicht der Komponenten (a), (b), (c) und (d), 3 bis 15 Gew.-% beträgt, und das Füllmittel, bezogen auf 100 Gew.-Teile der Harzkomponenten (a) und (b), in einer Menge von 5 bis 500 Gew.-Teilen enthalten ist.

3. Epoxidharzzusammensetzung nach Anspruch 1 oder 2, wobei das Alkenylphenolpolymer einen Polymerisationsgrad von etwa 20 bis 80 hat.

4. Epoxidharzzusammensetzung nach einem der Ansprüche 1 bis 3, wobei die Halogenverbindung (d) mindestens eine Verbindung ausgewählt aus folgender Gruppe ist: 2,2′, 3,3′, 4,4′, 5,5′-Octabromdiphenylether, 2,2′, 3,3′, 4,4′, 5,5′-Octachlordiphenylether, Decabromdiphenylether, Decachlordiphenylether, 1,2-Bis-(pentabromphenoxy)-ethan und 1,3-Bis-(2,4,6-tribromphenoxy)-2-hydroxypropan.

5. Epoxidharzzusammensetzung nach einem der Ansprüche 1 bis 4, wobei die Harnstoffverbindung ein 3-(p-Chlorphenyl)-1,1-dimethylharnstoff, 3-(3,4-Dichlorphenyl)-1,1-dimethylharnstoff, 3-(3,4-Dichlorphenyl)-1-methoxy-1-methylharnstoff, 3-(3,4-Dichlorphenyl)-1,1-diethylharnstoff oder 1-(2-Methylcyclohexyl)-3-phenylharnstoff ist.

6. Epoxidharzformkörper, hergestellt durch Formen und Härten einer Epoxidharzzusammensetzung nach einem der Ansprüche 1 bis 5.

7. Epoxidharzformkörper nach Anspruch 6, wobei der Formkörper einen Metalleinsatz enthält.

FIG. 1

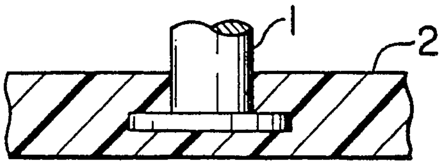


FIG. 2

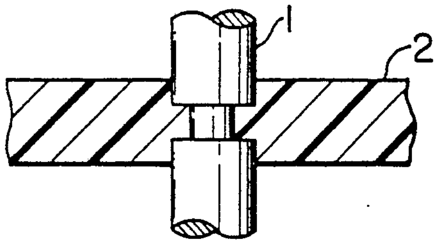


FIG. 3

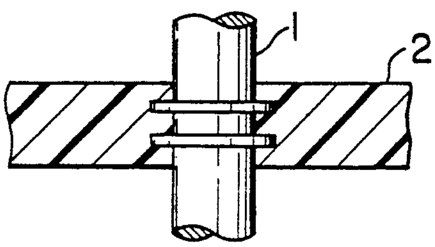


FIG. 4